# EUROPÄISCHE PATENTSCHRIFT

(11) **EP 2 707 782 B1**
(45) Veröffentlichungstag und Bekanntmachung des Hinweises auf die Patenterteilung: **10.06.2020**
(21) Anmeldenummer: 12753427.9
(22) Anmeldetag: 08.08.2012
(51) Int. Cl.: G05B 19/042

(54) **VERFAHREN UND SYSTEM ZUM BEREITSTELLEN VON GERÄTESPEZIFISCHEN EIGENSCHAFTSDATEN FÜR EIN AUTOMATISIERUNGSGERÄT EINER AUTOMATISIERUNGSANLAGE**
METHOD AND SYSTEM FOR PROVIDING DEVICE-SPECIFIC PROPERTY DATA FOR AN AUTOMATION DEVICE IN AN AUTOMATION INSTALLATION
PROCÉDÉ ET SYSTÈME POUR FOURNIR DES DONNÉES SUR LES PROPRIÉTÉS SPÉCIFIQUES D'UN APPAREIL D'AUTOMATISATION D'UNE INSTALLATION D'AUTOMATISATION

(30) Priorität: 30.08.2011 DE 102011081803
(43) Veröffentlichungstag der Anmeldung: 19.03.2014
(73) Patentinhaber: Siemens Aktiengesellschaft, 80333 München (DE)
(72) Erfinder: FRIES, Steffen, 85598 Baldham (DE); GESSNER, Jürgen, 85661 Forstinning (DE); HOUYOU, Amine, Mohamed, 81543 München (DE); HUTH, Hans-Peter, 80638 München (DE); SCHATTLEITNER, Angela, 83104 Tuntenhausen (DE)
(86) Internationale Anmeldenummer: PCT/EP2012/065488
(87) Internationale Veröffentlichungsnummer: WO 2013/029939

(56) Entgegenhaltungen:
- EP-A1- 2 333 624
- WO-A1-01/46765
- WO-A1-2004/013712

## Beschreibung

Die Erfindung betrifft ein Verfahren und ein System zum Bereitstellen von gerätespezifischen Eigenschaftsdaten für ein Automatisierungsgerät einer Automatisierungsanlage, insbesondere für ein Automatisierungssteuergerät, ein SPS-Steuergerät oder ein Feldgerät.

Automatisierungsgeräte müssen im Allgemeinen konfiguriert werden, bevor sie im Zusammenspiel mit anderen Geräten und anderen Automatisierungsgeräten einer Automatisierungsanlage genutzt werden können. In herkömmlichen Automatisierungssystemen bzw. Automatisierungsanlagen erfolgt daher eine Parametrisierung der Automatisierungsgeräte der Automatisierungsgeräte vor dem eigentlichen Einsatz. Diese Parametrisierung kann allgemein Konfigurationsdaten umfassen, die beispielsweise eine Adresse des Automatisierungsgerätes innerhalb des Netzwerkes oder einsatzspezifische Konfigurationsdaten, wie beispielsweise Schaltweiten des Automatisierungsgerätes, aufweisen. Außerdem ist es möglich, während des Betriebes der Automatisierungsanlage eine Rekonfiguration eines Automatisierungsgerätes durchzuführen. Insbesondere ist es für eine automatisierte Konfiguration von Automatisierungsanlagen nötig, die gerätespezifischen Eigenschaften und Anforderungen der Automatisierungsgeräte der Automatisierungsanlage zu kennen und für die Konfiguration zu berücksichtigen. Da Sicherheit gegenüber Datenmanipulationen zunehmend von Bedeutung wird, werden zunehmend Automatisierungsgeräte mit Sicherheitsmerkmalen bzw. Authentisierungs-Credentials ausgeliefert.

Bei herkömmlichen Automatisierungsanlagen erfolgt die Konfiguration von Automatisierungsgeräten der Automatisierungsanlagen weitestgehend ungeschützt, sodass Dritte, welche Zugang zu der Automatisierungsanlage erlangen, gerätespezifische Eigenschaftsdaten des Automatisierungsgerätes der Automatisierungsanlage verändern können. Dies kann während des Betriebes der Automatisierungsanlage zu teilweise katastrophalen Fehlfunktionen führen, da eventuell die Konfiguration der Automatisierungsanlage auf der Grundlage von falschen Eigenschaftsdaten der Automatisierungsgeräte der Automatisierungsanlage durchgeführt wird.

EP 2 333 624 A1 beschreibt ein Verfahren zur Konfiguration einer Komponente in einer industriellen Automatisierungsanordnung. Es werden von der Komponente Authentifizierungsinformationen an eine Konfigurationseinrichtung gesendet. Anhand der Authentifizierungsinformation wird durch die Konfigurationseinrichtung ein Profil für die Komponente ausgewählt oder erstellt. Das Profil wird an die Komponente übertragen und auf diese angewendet. Die Authentifizierungsinformation kann als ein auf der Komponente gespeichertes oder in der Komponente eingegebenes Zertifikat verwendet werden.

WO 2004/013712 A1 beschreibt ein Verfahren zur Aktualisierung von Gerätebeschreibungen für Feldgeräte der Prozessautomatisierungstechnik. Notwendige Gerätebeschreibungen werden via Internet von einem Server, auf dem die aktuellsten Gerätebeschreibungen abgespeichert sind, geladen. Das Anwendungsprogramm richtet in regelmäßigen Abständen Anfragen an den Server, ob geänderte Gerätebeschreibungen vorliegen.

WO 01/46765 A1 beschreibt ein Verfahren für eine zuverlässige Kommunikation über Standardnetze durch das Öffnen redundanter Verbindungen unter den verbundenen Nachrichtenprotokollen solcher Standardnetze und durch die Annahme eines Echos von gesendeten Nachrichten, das sowohl die Nachrichtenerzeugnisse als auch das Versagen der Nachrichtenkonsumenten bei beiden Verbindungen offenbart. Die Konfigurationsdaten enthalten gemäß dem Sicherheitsprotokoll Daten die einzigartig einem Gerät, wie beispielsweise die Seriennummer des Geräts, zugeordnet werden können.

Es ist daher eine Aufgabe der vorliegenden Erfindung, ein Verfahren und ein System zum sicheren Bereitstellen von gerätespezifischen Eigenschaftsdaten für ein Automatisierungsgerät einer Automatisierungsanlage zu schaffen, in der gerätespezifische Eigenschaftsdaten vor Manipulationen Dritter geschützt sind.

Die Aufgabe wird erfindungsgemäß durch ein Verfahren mit den in Patentanspruch 1 angegebenen Merkmalen gelöst.

Die Erfindung schafft demnach ein Verfahren zum Bereitstellen von gerätespezifischen Eigenschaftsdaten für ein Automatisierungsgerät einer Automatisierungsanlage mit den Merkmalen des Patentanspruchs 1.

Gemäß dem erfindungsgemäßen Verfahren wird das Authentisierungs-Credential durch ein Gerätezertifikat des Herstellers des Automatisierungsgerätes gebildet.

Bei einer möglichen Ausführungsform des erfindungsgemäßen Verfahrens weisen die gerätespezifischen Eigenschaftsdaten des Automatisierungsgerätes Eigenschaftsdaten zur Beschreibung technischer Eigenschaften des Automatisierungsgerätes auf.

Bei einer weiteren möglichen Ausführungsform des erfindungsgemäßen Verfahrens weisen die gerätespezifischen Eigenschaftsdaten des Automatisierungsgerätes Eigenschaftsdaten zur Beschreibung von Leistungsmerkmalen des Automatisierungsgerätes auf.

Bei einer weiteren möglichen Ausführungsform des erfindungsgemäßen Verfahrens weisen die gerätespezifischen Eigenschaftsdaten des Automatisierungsgerätes Eigenschaftsdaten zur Beschreibung eines Ressourcen-Verbrauchs des Automatisierungsgerätes auf.

Bei einer weiteren möglichen Ausführungsform des erfindungsgemäßen Verfahrens weisen die gerätespezifischen Eigenschaftsdaten des Automatisierungsgerätes Eigenschaftsdaten zur Beschreibung von geforderten Parametern von Geräten, die durch das Automatisierungsgerät gesteuert werden, auf.

Bei einer weiteren möglichen Ausführungsform des erfindungsgemäßen Verfahrens weisen die gerätespezifischen Eigenschaftsdaten des Automatisierungsgerätes Eigenschaftsdaten zur Beschreibung zulässiger Betriebsbereiche des Automatisierungsgerätes auf.

Bei einer möglichen Ausführungsform des erfindungsgemäßen Verfahrens liegen die gerätespezifischen Eigenschaftsdaten als EDDL - (Electronic Device Description Language) Daten vor.

Gemäß dem erfindungsgemäßen Verfahren werden die gerätespezifischen Eigenschaftsdaten des Automatisierungsgerätes als Attributdaten in das Gerätezertifikat des Herstellers des Automatisierungsgerätes eingeschrieben, um die gerätespezifischen Eigenschaftsdaten an das Gerätezertifikat des Automatisierungsgerätes zu binden.

Bei einer möglichen Ausführungsform des erfindungsgemäßen Verfahrens wird eine Adresse zur Adressierung der gerätespezifischen Eigenschaftsdaten des Automatisierungsgerätes in das Gerätezertifikat des Herstellers des Automatisierungsgerätes eingeschrieben, um die gerätespezifischen Eigenschaftsdaten an das Gerätezertifikat des Automatisierungsgerätes zu binden.

Bei einer möglichen Ausführungsform des erfindungsgemäßen Verfahrens wird die Adresse zur Adressierung der gerätespezifischen Eigenschaftsdaten anhand einer gerätespezifischen Seriennummer, die in dem Gerätezertifikat des Automatisierungsgerätes enthalten ist, ermittelt.

Gemäß dem erfindungsgemäßen Verfahren werden die gerätespezifischen Eigenschaftsdaten des Automatisierungsgerätes als codierte Attributdaten in das Gerätezertifikat des Automatisierungsgerätes eingeschrieben, um die gerätespezifischen Eigenschaftsdaten an das Gerätezertifikat des Automatisierungsgerätes zu binden.

Gemäß dem erfindungsgemäßen Verfahren erfolgt das Binden der gerätespezifischen Eigenschaftsdaten an das Authentisierungs-Credential des Automatisierungsgerätes durch einen Konfigurationsserver.

Gemäß dem erfindungsgemäßen Verfahren erfolgt das Binden der gerätespezifischen Eigenschaftsdaten an das Authentisierungs-Credential des Automatisierungsgerätes durch einen Policy-Enforcement-Server der Automatisierungsanlage.

Gemäß dem erfindungsgemäßen Verfahrens bindet der Konfigurationsserver oder der Policy-Enforcement-Server die gerätespezifischen Eigenschaftsdaten des Automatisierungsgerätes, die von einem beim Hersteller bereitgestellten Capability Server abgeholt werden, an das Authentisierungs-Credential, nachdem der Authentisierungsserver dem Konfigurationsserver oder dem Policy-Enforcement-Server eine erfolgreiche Authentisierung des Automatisierungsgerätes gegenüber dem Authentisierungsserver gemeldet hat.

Bei einer möglichen Ausführungsform des erfindungsgemäßen Verfahrens werden die gerätespezifischen Eigenschaftsdaten des Automatisierungsgerätes digital signiert.

Bei einer möglichen Ausführungsform des erfindungsgemäßen Verfahrens weist das mindestens eine Authentisierungs-Credential ein Gerätezertifikat des Herstellers des Automatisierungsgerätes und/oder einen kryptographischen Schlüssel und/oder ein kryptographisches Schlüsselpaar auf.

Die Erfindung schafft ferner ein System zur Bereitstellung von gerätespezifischen Eigenschaftsdaten für ein Automatisierungsgerät einer Automatisierungsanlage mit den in Patentanspruch 8 angegebenen Merkmalen.

Die Erfindung schafft demnach ein System zum Bereitstellen von gerätespezifischen Eigenschaftsdaten für ein Automatisierungsgerät einer Automatisierungsanlage mit den Merkmalen des Patentanspruchs 8.

Bei einer möglichen Ausführungsform des erfindungsgemäßen Systems weist das Automatisierungsgerät ein Automatisierungssteuergerät, ein SPS-Steuergerät oder ein Feldgerät auf.

Im Weiteren werden mögliche Ausführungsformen des erfindungsgemäßen Verfahrens und des erfindungsgemäßen Systems zum Bereitstellen von gerätespezifischen Eigenschaftsdaten für ein Automatisierungsgerät einer Automatisierungsanlage unter Bezugnahme auf die beiliegenden Figuren näher beschrieben.

Es zeigen:
- Fig. 1: ein Blockschaltbild zur Darstellung eines Ausführungsbeispiels des erfindungsgemäßen Systems zum Bereitstellen von gerätespezifischen Eigenschaftsdaten für ein Automatisierungsgerät einer Automatisierungsanlage;
- Fig. 2: ein Ausführungsbeispiel für ein bei dem erfindungsgemäßen Verfahren und System eingesetzten Authentisierungs-Credential;
- Fig. 3: ein weiteres Ausführungsbeispiel für ein bei dem erfindungsgemäßen Verfahren und System eingesetzten Authentisierungs-Credential.

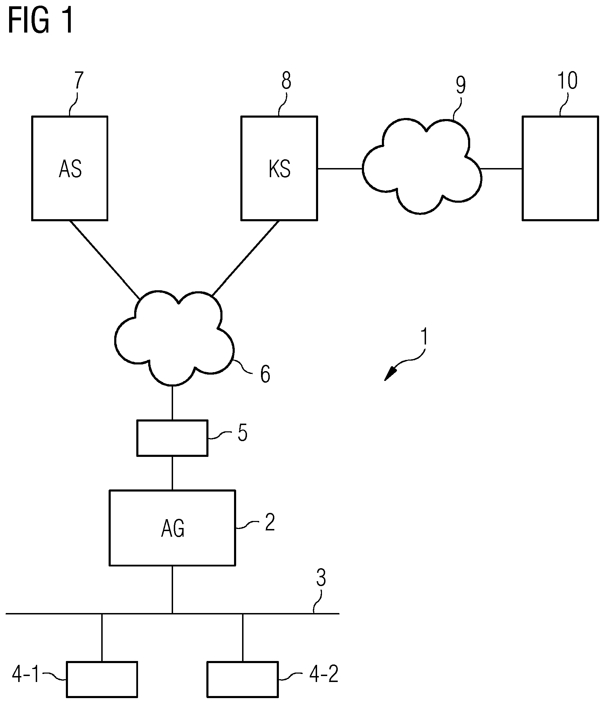

Im Folgenden wird ein Ausführungsbeispiel für ein erfindungsgemäßes System und Verfahren zum Bereitstellen von gerätespezifischen Eigenschaftsdaten für ein Automatisierungsgerät einer Automatisierungsanlage unter Bezugnahme auf Fig. 1 näher beschrieben. Wie man aus Fig. 1 erkennen kann, weist eine Automatisierungsanlage 1 mindestens ein Automatisierungsgerät 2 auf. Bei dem Automatisierungsgerät 2 kann es sich beispielsweise um ein Automatisierungssteuergerät handeln, das über einen Bus, insbesondere einen Feldbus 3, weitere Geräte 4-1, 4-2 ansteuern kann, wie in Fig. 1 dargestellt. Bei dem Automatisierungsgerät 2 kann es sich beispielsweise um ein SPS-Steuergerät handeln. Weiterhin kann es sich bei dem Automatisierungsgerät auch um ein Feldgerät handeln. Das Automatisierungsgerät ist über einen Netzzugangsswitch 5 an ein Datennetzwerk 6 angeschlossen, wobei an dem Datennetzwerk 6 bei dem in Fig. 1 dargestellten Ausführungsbeispiel ferner ein Authentisierungsserver 7, ein Konfigurationsserver bzw. Engineering-Server 8 angeschlossen sind. Weiterhin kann die Automatisierungsanlage 1 bei einer möglichen Ausführungsform einen in Fig. 1 nicht dargestellten Policy-Enforcement-Server aufweisen. Der Authentisierungsserver 7 ist bei einer möglichen Ausführungsform ein AAA-Server zur Durchführung einer Geräteauthentisierung und einer Zugangskontrolle. Bei einem Ausführungsbeispiel kann es sich bei dem Authentisierungsserver 7 um einen RADIUS-Server handeln. Der Konfigurationsserver 8 kann in dem in Fig. 1 dargestellten Ausführungsbeispiel über ein weiteres Netzwerk 9 an einen Server 10 des Geräteherstellers angeschlossen sein. Bei dem Gerätehersteller kann es sich beispielsweise um den Hersteller des Automatisierungsgerätes 2 handeln. Bei dem erfindungsgemäßen System und Verfahren zum Bereitstellen von gerätespezifischen Eigenschaftsdaten für ein Automatisierungsgerät 2 der Automatisierungsanlage 1 sind die gerätespezifischen Eigenschaftsdaten des Automatisierungsgerätes 2 an ein Authentisierungs-Credential des Automatisierungsgerätes 2 gebunden. Dieser Authentisierungs-Credential verwendet das Automatisierungsgerät 2 zu seiner Authentisierung gegenüber dem Authentisierungsserver 7. Bei dem Authentisierungs-Credential kann es sich bei einer möglichen Ausführungsform um ein Gerätezertifikat des Herstellers des Automatisierungsgerätes 2 handeln. Bei einer weiteren möglichen Ausführungsform weist das Authentisierungs-Credential einen kryptographischen Schlüssel und/oder ein kryptographisches Schlüsselpaar auf. Das Binden der gerätespezifischen Eigenschaftsdaten an das Authentisierungs-Credential des Automatisierungsgerätes 2 erfolgt bei einer möglichen Ausführungsform durch den in Fig. 1 dargestellten Konfigurationsserver 8. Alternativ kann das Binden der gerätespezifischen Eigenschaftsdaten an das Authentisierungs-Credential auch durch einen Policy-Enforcement-Server der Automatisierungsanlage 1 erfolgen. Alternativ ist es auch möglich, dass das Binden der gerätespezifischen Eigenschaftsdaten an das Authentisierungs-Credential direkt durch den Authentisierungsserver 7 der Automatisierungsanlage erfolgt.

Das Binden der gerätespezifischen Eigenschaftsdaten des Automatisierungsgerätes 2 an das Authentisierungs-Credential, beispielsweise an das Gerätezertifikat des Herstellers des Automatisierungsgerätes 2, erfolgt bei einer möglichen Ausführungsform durch den Konfigurationsserver 8 bzw. einen Policy-Enforcement-Server nachdem der Authentisierungsserver 7 den Konfigurationsserver 8 bzw. den Policy-Enforcement-Server eine erfolgreiche Authentisierung des Automatisierungsgerätes 2 gegenüber dem Authentisierungsserver 7 gemeldet hat. Bei einer möglichen Ausführungsform werden die gerätespezifischen Eigenschaftsdaten von einem Capability-Server des Herstellers des jeweiligen Automatisierungsgerätes 2 abgeholt bzw. geladen. Bei einer möglichen Ausführungsform werden die gerätespezifischen Eigenschaftsdaten des Automatisierungsgerätes 2 digital signiert. Die gerätespezifischen Eigenschaftsdaten des Automatisierungsgerätes 2 können verschiedene Daten und Datentypen umfassen. Die gerätespezifischen Eigenschaftsdaten umfassen demnach bei einer möglichen Ausführungsform Eigenschaftsdaten zur Beschreibung technischer Eigenschaften des Automatisierungsgerätes 2. Weiterhin können die gerätespezifischen Eigenschaftsdaten des Automatisierungsgerätes 2 Leistungsmerkmale des Automatisierungsgerätes 2 bzw. Gerätetyps des Automatisierungsgerätes 2 angeben. Die gerätespezifischen Eigenschaftsdaten können ferner Eigenschaftsdaten zur Beschreibung eines Ressourcen-Verbrauchs des Automatisierungsgerätes 2, beispielsweise eines Energieverbrauchs, aufweisen. Die gerätespezifischen Eigenschaftsdaten des Automatisierungsgerätes können ferner Eigenschaftsdaten zur Beschreibung von geforderten Parametern von Geräten angeben, die durch das Automatisierungsgerät 2 angesteuert werden. Beispielsweise können die Eigenschaftsdaten Parameter von den in Fig. 1 dargestellten Geräten 4-1, 4-2 enthalten, die durch das Automatisierungsgerät 2 über den Feldbus 3 angesteuert werden. Handelt es sich bei einem der gesteuerten Geräte 4-1 z.B. um einen Schrittmotor, so können die Eigenschaftsdaten einen Drehzahlbereich des angesteuerten Schrittmotors angeben, welcher durch das Automatisierungsgerät 2 angesteuert werden kann. Weiterhin können die gerätespezifischen Eigenschaftsdaten des Automatisierungsgerätes 2 Eigenschaftsdaten zur Beschreibung zulässiger Betriebsbereiche des Automatisierungsgerätes 2 aufweisen, beispielsweise einen zulässigen Betriebstemperaturbereich. Die gerätespezifischen Eigenschaftsdaten können bei einer möglichen Ausführungsform als EDDL-(Electronic Device Description Language)Daten vorliegen.

Bei einer möglichen Ausführungsform werden die gerätespezifischen Eigenschaftsdaten des Automatisierungsgerätes 2 als Attributdaten in ein Gerätezertifikat Z des Herstellers des Automatisierungsgerätes 2 eingeschrieben, um die gerätespezifischen Eigenschaftsdaten an das Gerätezertifikat Z des Automatisierungsgerätes 2 zu binden. Bei einer alternativen Ausführungsform des erfindungsgemäßen Verfahrens und Systems wird eine Adresse zur Adressierung der gerätespezifischen Eigenschaftsdaten des Automatisierungsgerätes 2 in das Gerätezertifikat Z des Herstellers des Automatisierungsgerätes 2 eingeschrieben, um die gerätespezifischen Eigenschaftsdaten an das Gerätezertifikat Z des Automatisierungsgerätes 2 zu binden. Bei einer möglichen Ausführungsform wird diese Adresse zur Adressierung der gerätespezifischen Eigenschaftsdaten anhand einer gerätespezifischen Seriennummer, die in dem Gerätezertifikat des Automatisierungsgerätes 2 enthalten ist, automatisch ermittelt. Bei einer weiteren möglichen Ausführungsvariante werden die gerätespezifischen Eigenschaftsdaten des Automatisierungsgerätes 2 als codierte Attributdaten in das Gerätezertifikat Z des Automatisierungsgerätes 2 eingeschrieben, um die gerätespezifischen Eigenschaftsdaten an das Gerätezertifikat des Automatisierungsgerätes 2 zu binden. Bei einer möglichen Ausführungsform fragt das Automatisierungsgerät 2 in regelmäßigen Zeitabständen oder bei Auftreten eines bestimmten Ereignisses an, ob aktuelle gerätespezifische Eigenschaftsdaten des Herstellers für das Automatisierungsgerät 2 vorhanden sind. Bei dem erfindungsgemäßen Verfahren und System wird ein Authentisierungs-Credential, insbesondere ein Herstellerzertifikat des Automatisierungsgerätes 2 zum Transport von gerätespezifischen Eigenschaftsdaten benutzt, welche insbesondere die gerätespezifischen Eigenschaftsdaten und Leistungsdaten und/oder Konfigurationsdaten umfassen. Diese gerätespezifischen Eigenschaftsdaten können die generellen Fähigkeiten der Geräteklasse oder auch eines spezifischen Gerätetyps oder des individuellen Automatisierungsgerätes 2 angeben.

Die gerätespezifischen Eigenschaftsdaten des Automatisierungsgerätes 2 können geräte- oder serienspezifisch direkt in das Gerätezertifikat Z des Herstellers eincodiert werden. Dabei kann die Größe des Zertifikates Z anwachsen, sodass der dafür notwendige Speicher zur Verfügung gestellt werden muss. Bei einer weiteren möglichen Ausführungsvariante enthält das Gerätezertifikat Z eine geräte- oder serienspezifische Seriennummer, die zusammen mit dem Aussteller und der Seriennummer des Gerätezertifikates Z eine ausreichende Grundlage bietet, mit der ein Server die gerätespezifischen Eigenschaftsdaten von einem Server des Herstellers des Automatisierungsgerätes 2 abfragen kann. Bei einer weiteren möglichen Ausführungsvariante enthält das Gerätezertifikat Z einen Link bzw. eine Adresse auf eine Webseite des Herstellers des Automatisierungsgerätes 2, in dem die möglichen gerätespezifischen Eigenschaftsdaten von einer Device Description Database abgelegt sind. Die von dem Hersteller des Automatisierungsgerätes 2 zur Verfügung gestellten Eigenschaftsdaten können digital signiert sein, um die Integrität dieser Daten zu sichern und sie somit für eine Automatisierung in der Planung der Automatisierungsanlage 1 nutzen zu können. Bei einer Ausführungsform kann man eine Logotype-Extension nutzen, um Geräte oder serienspezifische Eigenschaftstypen bzw. Informationen als 1D- oder 2D-Barcode einzucodieren. Die Abfrage der Daten, insbesondere der gerätespezifischen Eigenschaftsdaten von dem Server des Herstellers des Automatisierungsgerätes 2 kann dabei online oder offline, beispielsweise über eine mitgelieferte Datenbank, realisiert werden.

Das Ausführen von sicherheitsrelevanten Aktionen während einer Anbindung eines Automatisierungsgerätes 2 an eine Automatisierungsanlage bzw. ein Netzwerk ist einer der ersten Schritte, die beim Booten von Automatisierungsgeräten 2 durchgeführt wird. Dies kann vorteilhafterweise mit einer Erstkonfiguration des Automatisierungsgerätes 2 verbunden werden. Bei dem erfindungsgemäßen System ist es möglich, das Automatisierungsgerät 2 autark zu konfigurieren oder über eine zentrale Infrastruktur, welche abhängig von dem hinzugefügten Automatisierungsgerät 2 eine bestehende Systemkonfiguration adaptieren kann. Bei einer Einbettung in ein Gerätezertifikat Z können die Eigenschaftsdaten des Automatisierungsgerätes 2 zudem kryptographisch gesichert werden. Die Anbindung von gerätespezifischen Eigenschaftsdaten an einen Gerätetyp oder auch an ein spezifisches Automatisierungsgerät 2 unterstützt darüber hinaus auch einen Prozess der automatisierten Planung oder Commissioning von Automatisierungsanlagen 1 basierend auf den gerätespezifischen Eigenschaftsdaten der Automatisierungsgeräte.

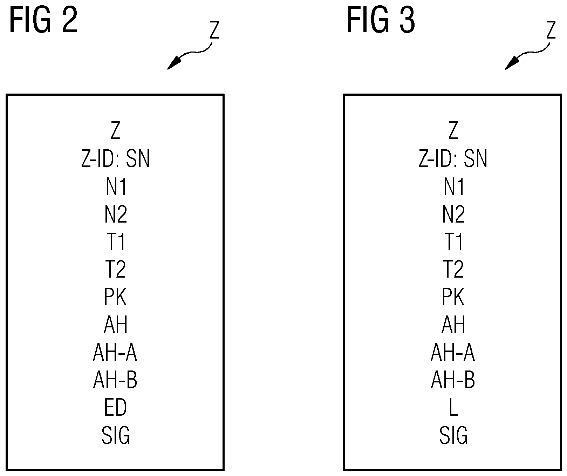

Fig. 2 zeigt ein Ausführungsbeispiel des Gerätezertifikates Z, bei dem gerätespezifische Eigenschaftsdaten als zusätzliches Attribut in dem Gerätezertifikat Z enthalten sind.

Das Zertifikat Z weist eine Zertifikat-ID, beispielsweise eine Seriennummer SN auf. Ferner enthält das Zertifikat Z den Namen N1 desjenigen, für den es ausgestellt wurde, sowie den Namen N2 des Ausstellers. Weiterhin gibt das Zertifikat Z an, ab wann es gültig ist, d.h. einen Zeitpunkt T1, und bis wann es gültig ist, d.h. einen Zeitpunkt T2. Ferner umfasst das Zertifikat Z einen öffentlichen Schlüssel PK und Attribute Att, beispielsweise Attribute Att-A, Att-B. Weiterhin weist das Zertifikat Z bei der in Fig. 2 dargestellten Ausführungsform als Attribut gerätespezifische Eigenschaftsdaten ED auf. Das Zertifikat Z kann ferner eine Signatur SIG des Herstellers aufweisen.

Fig. 3 zeigt eine alternative Ausführungsvariante, in der in dem Zertifikat Z des Geräteherstellers ein Link L zu dem Server des Geräteherstellers des Automatisierungsgerätes 2 eingeschrieben ist.

Die automatische Konfiguration eines Automatisierungsgerätes 2 in Abhängigkeit der Eigenschaftsdaten des Automatisierungsgerätes 2 kann beim Anmelden des Automatisierungsgerätes 2 an einem Netzwerk erfolgen. Dazu wird das Herstellerzertifikat 2 zur Netzanmeldung benutzt. Nach erfolgreicher Netzanmeldung wird das Gerätezertifikat bzw. der Link zu den Eigenschaftsdaten an einen Konfigurationsserver 8 übermittelt, der daraufhin das Automatisierungsgerät 2 entsprechend konfigurieren kann.

Im Einzelnen können bei einer möglichen Ausführungsform hierbei die folgenden Schritte ausgeführt werden.

Zunächst authentisiert sich das Automatisierungsgerät 2 mittels seines Authentisierungs-Credentials gegenüber dem Authentisierungsserver 7 der Automatisierungsanlage 1, um Zugang zu dem Netzwerk zu erhalten. Bei dem Authentisierungsserver 7 handelt es sich beispielsweise um einen RADIUS-Server. Das herstellerspezifische Authentisierungs-Credential wird verwendet, um das Automatisierungsgerät 2 gegenüber dem Authentisierungsserver 7 zu authentisieren, wobei dieses Credential dem Server 7 bekannt ist. Handelt es sich beispielsweise bei dem Authentisierungs-Credential um ein Gerätezertifikat, können bei einer möglichen Ausführungsvariante zertifikatsbasierte EAP-Methoden, wie beispielsweise EAP-TSF, verwendet werden. Das Authentisierungs-Credential kann bei einer möglichen Ausführungsform ein Link auf eine Gerätebeschreibungsdatenbank des Herstellers des Automatisierungsgerätes 2 enthalten.

Nach erfolgreicher Authentisierung gegenüber dem Authentisierungsserver 7 sendet der Authentisierungsserver 7 dem Network Access Switch 5 eine Mitteilung, dass es das Automatisierungsgerät 2 an das Netzwerk 6 anbinden darf. Anschließend kann eine Adresskonfiguration des Automatisierungsgerätes 2 beispielsweise mit einer IP-Adresse erfolgen.

Der Authentisierungsserver 7 meldet die erfolgreiche Authentisierung des Automatisierungsgerätes 2 beispielsweise an den in Fig. 1 dargestellten Konfigurationsserver 8. Dabei kann optional das Gerätezertifikat des Automatisierungsgerätes 2 mitgeschickt werden.

Mittels eines Links auf die Gerätebeschreibungsdatenbank bzw. den Server des Herstellers kann der Konfigurationsserver 8 dann die notwendigen Daten über das Netzwerk 9 bei einem Server 10 des Herstellers des Automatisierungsgerätes 2 abfragen, um die Konfiguration des Automatisierungsgerätes 2 bzw. gemäß einem Anlagenplan der Automatisierungsanlage 1 durchzuführen. Dabei sendet der Server 10 des Herstellers die gerätespezifischen Eigenschaftsdaten zu dem Konfigurationsserver 8. Der Konfigurationsserver 8 ermittelt anlagenspezifische Konfigurationsparameter für das Automatisierungsgerät 2 und sendet diese anschließend an das Automatisierungsgerät 2 über das Netzwerk 6 und das Netzzugangsswitch 5.

Durch das erfindungsgemäße Verfahren und System wird der Konfigurationsaufwand zur Konfiguration eines Automatisierungsgerätes 2 innerhalb einer Automatisierungsanlage 1 im Vergleich zu herkömmlichen Anlagen erheblich vermindert. Die Konfiguration eines Automatisierungsgerätes 2 mithilfe der übermittelten Eigenschaftsdaten kann dabei innerhalb kurzer Zeit abgeschlossen werden. Nach erfolgreicher Authentisierung des Automatisierungsgerätes 2 kann unmittelbar anschließend eine automatische Konfiguration des Automatisierungsgerätes 2 erfolgen, ohne dass es irgendeiner manuellen Konfiguration des Automatisierungsgerätes 2 bedarf. Darüber hinaus erfolgt die Konfiguration in geschützter Form, sodass Manipulationen an Eigenschaftsdaten des Automatisierungsgerätes 2 durch Dritte nicht möglich sind.

## Patentansprüche

1. Verfahren zum Bereitstellen von gerätespezifischen Eigenschaftsdaten für ein Automatisierungsgerät (2) einer Automatisierungsanlage (1), bei dem das Automatisierungsgerät (2) über ein Datennetzwerk (6) mit einem Authentisierungsserver (7) und einem Konfigurationsserver (8) verbunden ist und sich mittels mindestens eines Authentisierungs-Credentials gegenüber dem Authentisierungsserver (7) der Automatisierungsanlage (1) authentisiert,
**dadurch gekennzeichnet, dass**
der Konfigurationsserver (8) über ein weiteres Netzwerk (9) mit einem Capability Server des Herstellers des Automatisierungsgerätes (2) verbunden ist, um gerätespezifische Eigenschaftsdaten, umfassend Eigenschaftsdaten zur Beschreibung technischer Eigenschaften des Automatisierungsgerätes (2) durch den Konfigurationsserver (8) abzufragen und abzuholen und die von dem Capability Server abgeholten gerätespezifischen Eigenschaftsdaten von dem Konfigurationsserver (8) oder einem Policy-Enforcement-Server an das Authentisierungs-Credential des Automatisierungsgerätes (2) zu binden, nachdem der Authentisierungsserver (7) dem Konfigurationsserver (8) oder dem Policy-Enforcement-Server eine erfolgreiche Authentisierung des Automatisierungsgerätes (2) gegenüber dem Authentisierungsserver (7) mittels der Authentisierungs-Credential gemeldet hat, und wobei das Authentisierungs-Credential durch ein Gerätezertifikat (Z) des Herstellers des Automatisierungsgerätes (2) gebildet wird und die gerätespezifische Eigenschaftsdaten des Automatisierungsgerätes (2) als codierte Attributdaten in das Gerätezertifikat (Z) des Automatisierungsgerätes (2) eingeschrieben werden, um die gerätespezifischen Eigenschaftsdaten an das Gerätezertifikat (Z) des Automatisierungsgerätes (2) zu binden.

2. Verfahren nach Anspruch 1,
wobei die gerätespezifischen Eigenschaftsdaten des Automatisierungsgerätes (2)
- Eigenschaftsdaten zur Beschreibung von Leistungsmerkmalen des Automatisierungsgerätes (2),
- Eigenschaftsdaten zur Beschreibung eines Ressourcenverbrauches des Automatisierungsgerätes (2),
- Eigenschaftsdaten zur Beschreibung von geforderten Parametern von Geräten (4), die durch das Automatisierungsgerät (2) gesteuert werden, und
- Eigenschaftsdaten zur Beschreibung zulässiger Betriebsbereiche des Automatisierungsgerätes (2)
aufweisen.

3. Verfahren nach einem der vorangehenden Ansprüche 1 und 2,
wobei die gerätespezifischen Eigenschaftsdaten als EDDL-(Electronic Device Description Language)Daten vorliegen.

4. Verfahren nach einem der vorangehenden Ansprüche 2 und 3,
wobei eine Adresse zur Adressierung der gerätespezifischen Eigenschaftsdaten des Automatisierungsgerätes (2) in das Gerätezertifikat (Z) des Herstellers des Automatisierungsgerätes (2) eingeschrieben wird, um die gerätespezifischen Eigenschaftsdaten an das Gerätezertifikat (Z) des Automatisierungsgerätes (2) zu binden.

5. Verfahren nach Anspruch 3,
wobei die Adresse zur Adressierung der gerätespezifischen Eigenschaftsdaten anhand einer gerätespezifischen Seriennummer, die in dem Gerätezertifikat (Z) des Automatisierungsgerätes (2) enthalten ist, ermittelt wird.

6. Verfahren nach einem der vorangehenden Ansprüche 1 bis 5,
wobei die gerätespezifischen Eigenschaftsdaten des Automatisierungsgerätes (2) digital signiert werden.

7. Verfahren nach einem der vorangehenden Ansprüche 1 bis 6,
wobei das mindestens eine Authentisierungs-Credential ein Gerätezertifikat (Z) des Herstellers des Automatisierungsgerätes und/oder einen kryptographischen Schlüssel und/oder ein kryptographisches Schlüsselpaar aufweist.

8. System zum Bereitstellen von gerätespezifischen Eigenschaftsdaten für ein Automatisierungsgerät (2) einer Automatisierungsanlage (1), bei dem das Automatisierungsgerät (2) über ein Datennetzwerk (6) mit einem Authentisierungsserver (7) und einem Konfigurationsserver (8) verbunden ist, und welches dazu eingerichtet ist, sich mittels mindestens eines Authentisierungs-Credentials gegenüber dem Authentisierungsserver (7) der Automatisierungsanlage (1) zu authentisieren,
**dadurch gekennzeichnet, dass**
das System dazu eingerichtet ist, die gerätespezifischen Eigenschaftsdaten, umfassend Eigenschaftsdaten zur Beschreibung technischer Eigenschaften des Automatisierungsgerätes (2), die von einem beim Hersteller des Automatisierungsgerätes (2) bereitgestellten Capability Server über den Konfigurationsserver (8) abgeholt werden, welcher über ein weiteres Netzwerk mit dem Capability Server verbunden ist, um von dem Konfigurationsserver (8) oder einem Policy-Enforcement-Server an das Authentisierungs-Credential des Automatisierungsgerätes (2) gebunden zu werden, nachdem der Authentisierungsserver (7) dem Konfigurationsserver (8) oder dem Policy-Enforcement-Server eine erfolgreiche Authentisierung des Automatisierungsgerätes (2) gegenüber dem Authentisierungsserver (7) mittels der Authentisierungs-Credential mittels der Authentisierungs-Credential gemeldet hat, und wobei das Authentisierungs-Credential durch ein Gerätezertifikat (Z) des Herstellers des Automatisierungsgerätes (2) gebildet wird und die gerätespezifische Eigenschaftsdaten des Automatisierungsgerätes (2) als codierte Attributdaten in das Gerätezertifikat (Z) des Automatisierungsgerätes (2) eingeschrieben werden, um die gerätespezifischen Eigenschaftsdaten an das Gerätezertifikat (Z) des Automatisierungsgerätes (2) zu binden.

9. System nach Anspruch 8,
wobei das Automatisierungsgerät (2) ein Automatisierungssteuergerät, ein SPS-Steuergerät oder ein Feldgerät aufweist.

## Claims

1. Method for providing device-specific property data for an automation device (2) of an automation facility (1), in which the automation device (2) is connected to an authentication server (7) and a configuration server (8) via a data network (6) and authenticates itself with the authentication server (7) of the automation facility (1) by way of at least one authentication credential,
**characterized in that**
the configuration server (8) is connected to a capability server of the manufacturer of the automation device (2) via a further network (9) in order to query and retrieve device-specific property data, comprising property data for describing technical properties of the automation device (2), through the configuration server (8) and to link the device-specific property data, retrieved from the capability server, from the configuration server (8) or a policy enforcement server to the authentication credential of the automation device (2), after the authentication server (7) has reported successful authentication of the automation device (2) with the authentication server (7) by way of the authentication credential to the configuration server (8) or the policy enforcement server, and wherein the authentication credential is formed by a device certificate (Z) of the manufacturer of the automation device (2) and the device-specific property data of the automation device (2) are written to the device certificate (Z) of the automation device (2) in the form of coded attribute data in order to link the device-specific property data to the device certificate (Z) of the automation device (2).

2. Method according to Claim 1,
wherein the device-specific property data of the automation device (2) contain
- property data for describing performance features of the automation device (2),
- property data for describing a resource consumption of the automation device (2),
- property data for describing required parameters of devices (4) that are controlled by the automation device (2), and
- property data for describing permissible operating ranges of the automation device (2).

3. Method according to either of preceding Claims 1 and 2,
wherein the device-specific property data are in the form of EDDL (electronic device description language) data.

4. Method according to either of preceding Claims 2 and 3,
wherein an address for addressing the device-specific property data of the automation device (2) is written to the device certificate (Z) of the manufacturer of the automation device (2) in order to link the device-specific property data to the device certificate (Z) of the automation device (2).

5. Method according to Claim 3,
wherein the address for addressing the device-specific property data is determined on the basis of a device-specific serial number that is contained in the device certificate (Z) of the automation device (2).

6. Method according to one of preceding Claims 1 to 5,
wherein the device-specific property data of the automation device (2) are digitally signed.

7. Method according to one of preceding Claims 1 to 6,
wherein the at least one authentication credential contains a device certificate (Z) of the manufacturer of the automation device and/or a cryptographic key and/or a cryptographic key pair.

8. System for providing device-specific property data for an automation device (2) of an automation facility (1), in which the automation device (2) is connected to an authentication server (7) and a configuration server (8) via a data network (6), and which is configured so as to authenticate itself with the authentication server (7) of the automation facility (1) by way of at least one authentication credential,
**characterized in that**
the system is configured such that the device-specific property data, comprising property data for describing technical properties of the automation device (2) that are retrieved from a capability server, provided by the manufacturer of the automation device (2), by the configuration server (8), which is connected to the capability server via a further network in order to be linked from the configuration server (8) or a policy enforcement server to the authentication credential of the automation device (2), after the authentication server (7) has reported successful authentication of the automation device (2) with the authentication server (7) by way of the authentication credential to the configuration server (8) or the policy enforcement server, and wherein the authentication credential is formed by a device certificate (Z) of the manufacturer of the automation device (2) and the device-specific property data of the automation device (2) are written to the device certificate (Z) of the automation device (2) in the form of coded attribute data in order to link the device-specific property data to the device certificate (Z) of the automation device (2).

9. System according to Claim 8,
wherein the automation device (2) is an automation controller, a PLC controller or a field device.

## Revendications

1. Procédé pour fournir des données sur les propriétés spécifiques d'un appareil d'automatisation (2) d'une installation d'automatisation (1), dans lequel l'appareil d'automatisation (2) est relié à un serveur d'authentification (7) et à un serveur de configuration (8) par le biais d'un réseau de données (6) et s'authentifie par rapport au serveur d'authentification (7) de l'installation d'automatisation (1) par le biais d'au moins un certificat d'authentification,
**caractérisé en ce que**
le serveur de configuration (8) est relié à un serveur de capacité du fabricant de l'appareil d'automatisation (2) par le biais d'un autre réseau (9), pour interroger et récupérer par le serveur de configuration (8), des données sur les propriétés spécifiques d'un appareil comprenant des données sur les propriétés pour décrire des propriétés techniques de l'appareil d'automatisation (2) et pour relier les données sur les propriétés spécifiques d'un appareil récupérées par le serveur de capacité, du serveur de configuration (8) ou d'un serveur de policy enforcement au certificat d'authentification de l'appareil d'automatisation (2), après que le serveur d'authentification (7) a envoyé au serveur de configuration (8) ou au serveur de policy enforcement, une authentification réussie de l'appareil d'automatisation (2) par rapport au serveur d'authentification (7) au moyen du certificat d'authentification, et dans lequel le certificat d'authentification est formé par un certificat d'appareil (Z) du fabricant de l'appareil d'automatisation (2) et les données sur les propriétés spécifiques de l'appareil d'automatisation (2) sont inscrites en tant que données d'attribut codées dans le certificat d'appareil (Z) de l'appareil d'automatisation (2), pour relier les données sur les propriétés spécifiques d'un appareil au certificat d'appareil (Z) de l'appareil d'automatisation (2).

2. Procédé selon la revendication 1, dans lequel les données sur les propriétés spécifiques de l'appareil d'automatisation (2) présentent
- des données sur les propriétés pour décrire des caractéristiques de performance de l'appareil d'automatisation (2),
- des données sur les propriétés pour décrire une consommation de ressources de l'appareil d'automatisation (2),
- des données sur les propriétés pour décrire des paramètres requis d'appareils (4) qui sont commandés par l'appareil d'automatisation (2), et
- des données sur les propriétés pour décrire des plages de fonctionnement autorisées de l'appareil d'automatisation (2).

3. Procédé selon l'une des revendications précédentes 1 et 2, dans lequel les données sur les propriétés spécifiques d'un appareil sont sous forme de données EDDL (Electronic Device Description Language).

4. Procédé selon l'une des revendications précédentes 2 et 3, dans lequel une adresse pour l'adressage des données sur les propriétés spécifiques de l'appareil d'automatisation (2) est inscrite dans le certificat d'appareil (Z) du fabricant de l'appareil d'automatisation (2) pour relier les données sur les propriétés spécifiques d'un appareil au certificat d'appareil (Z) de l'appareil d'automatisation (2).

5. Procédé selon la revendication 3, dans lequel l'adresse pour l'adressage des données sur les propriétés spécifiques d'un appareil est déterminée à l'aide d'un numéro de série spécifique d'un appareil qui est contenu dans le certificat d'appareil (Z) de l'appareil d'automatisation (2).

6. Procédé selon l'une des revendications précédentes 1 à 5, dans lequel les données sur les propriétés spécifiques de l'appareil d'automatisation (2) ont une signature numérique.

7. Procédé selon l'une des revendications précédentes 1 à 6, dans lequel l'au moins un certificat d'authentification présente un certificat d'appareil (Z) du fabricant de l'appareil d'automatisation et/ou une clé cryptographique et/ou une paire de clés cryptographiques.

8. Système pour fournir des données sur les propriétés spécifiques d'un appareil d'automatisation (2) d'une installation d'automatisation (1), dans lequel l'appareil d'automatisation (2) est relié à un serveur d'authentification (7) et à un serveur de configuration (8) par le biais d'un réseau de données (6) et est conçu pour s'authentifier par rapport au serveur d'authentification (7) de l'installation d'automatisation (1) par le biais d'au moins un certificat d'authentification,
**caractérisé en ce que**
le système est conçu pour interroger et récupérer des données sur les propriétés spécifiques d'un appareil comprenant des données de propriété pour décrire des propriétés techniques de l'appareil d'automatisation (2) qui sont récupérées par un serveur de capacité fourni par le fabricant de l'appareil d'automatisation (2) par le biais du serveur de configuration (8), lequel est relié au serveur de capacité par le biais d'un autre réseau, pour être relié par le serveur de configuration (8) ou un serveur de policy enforcement, au certificat d'authentification de l'appareil d'automatisation (2), après que le serveur d'authentification (7) a envoyé au serveur de configuration (8) ou au serveur de policy enforcement, une authentification réussie de l'appareil d'automatisation (2) par rapport au serveur d'authentification (7) au moyen du certificat d'authentification, et dans lequel le certificat d'authentification est formé par un certificat d'appareil (Z) du fabricant de l'appareil d'automatisation (2) et les données sur les propriétés spécifiques de l'appareil d'automatisation (2) sont inscrites en tant que données d'attribut codées dans le certificat d'appareil (Z) de l'appareil d'automatisation (2), pour relier les données sur les propriétés spécifiques d'un appareil au certificat d'appareil (Z) de l'appareil d'automatisation (2).

9. Système selon la revendication 8, dans lequel l'appareil d'automatisation (2) présente un appareil de commande d'automatisation, un appareil de commande SPS ou un appareil de champ.
